# EUROPÄISCHE PATENTANMELDUNG

(11) **EP 4 006 397 A1**
(43) Veröffentlichungstag der Anmeldung: **01.06.2022**
(21) Anmeldenummer: 21208920.5
(22) Anmeldetag: 18.11.2021
(51) Int. Cl.: F16L 5/10

(54) **RADONDICHTE MANSCHETTE UND INSTALLATIONSANORDNUNG MIT DERSELBEN**

(30) Priorität: 25.11.2020 DE 202020106793 U
(71) Anmelder: Eisenhauer, Michael, 32694 Dörentrup (DE)
(72) Erfinder: Eisenhauer, Michael, 32694 Dörentrup (DE)
(74) Vertreter: Wickord, Wiro

(57) **Zusammenfassung**

Die Erfindung betrifft eine Verschlussvorrichtung (1) zum radondichten Verschluss einer Durchdringungsstelle einer Leitung (8) durch eine Wand (9), insbesondere eine baugrundseitige Bodenplatte und/oder Geschossdecke und/oder Kelleraußenwand und/oder Kellerbodenplatte, umfassend einen Anlagekörper (6) mit einem Leitungsdurchbruch (11) und umfassend eine als ein Hohlkörper aus einem dauerelastischen, luftdichten Material ausgebildete Manschette (2) mit einem sich von einem oberen Mantelende (10.1) zu einem gegenüberliegenden unteren Mantelende (10.2) trichterförmig aufweitenden Mantel (4), mit einem sich an das obere Mantelende (10.1) des Mantels (4) anschließenden, hohlzylindrischen Kragen (3) und mit einem sich an das untere Mantelende (10.2) des Mantels (4) anschließenden und radial umlaufend von dem Mantel (4) abragenden Flansch (5), wobei die Manschette (2) an einer dem Kragen (3) gegenüberliegenden ersten Flanschverbindungsfläche (12.1) des Flansches (5) luft- und/oder radondicht mit einer Verbindungsfläche (13) des Anlagekörpers (6) verbunden ist derart, dass der Anlagekörper (6) eine Rückwand für den Mantel (4) bildet, wobei der Leitungsdurchbruch (11) des Anlagekörpers (6) und der Kragen (3) der Manschette (2) fluchtend zueinander positioniert sind derart, dass ein Leitungsdurchlass zur Durchführung der Leitung (8) gebildet ist, wobei ein Durchbruchsdurchmesser des Leitungsdurchbruchs (11) kleiner einem Manteldurchmesser des Mantels (4) auf Höhe des unteren Mantelendes (10.2) ist und wobei der Anlagekörper (6) jedenfalls in einem um den Leitungsdurchbruch (11) umlaufenden und den Mantel (4) verdeckenden Bereich aus einem radondichten Material gebildet ist.

## Beschreibung

Die Erfindung betrifft eine Verschlussvorrichtung zum radondichten Verschluss einer Durchdringungsstelle einer Leitung durch eine Wand. Ferner betrifft die Erfindung eine Installationsanordnung umfassend eine Wand mit einem Wanddurchbruch, umfassend eine durch den Wanddurchbruch hindurchgeführte und aus der Wand hinausragende Leitung und umfassend eine Verschlussvorrichtung. Die Wand ist insbesondere als eine baugrundseitige Bodenplatte, Geschossdecke, Kelleraußenwand beziehungsweise Kellerbodenplatte ausgebildet.

In Gebieten mit einem radium- beziehungsweise uranerzhaltigen Baugrund besteht die Problematik, dass radioaktives Radon, welches als ein Zerfallsprodukt von Uran und Radium entsteht, aus dem Baugrund in darauf errichtete Gebäude eindringen kann. Dadurch bildet sich in Räumen, die an den Baugrund angrenzen, typischerweise in einem Keller oder einem Erdgeschoss des Gebäudes, radonhaltige Luft. Diese radonhaltige Luft ist giftig, da die darin enthaltenen radioaktiven Radonteilchen beziehungsweise insbesondere deren radioaktive Zerfallsprodukte (radioaktive Isotope der Elemente Polonium, Bismut und Blei) über die Lunge eingeatmet werden, aufgrund ihrer energetischen Alphastrahlung Körperzellen zerstören können und insofern nachweißlich krebserregend sind. Da Radon als ein Edelgas chemisch inert ist, das heißt kaum mit anderen chemischen Elementen reagiert, und seine radioaktiven Zerfallsprodukte eine sehr geringe Partikelgröße aufweisen, ist eine Filtration beziehungsweise Sorption des Radons aus der Raumluft faktisch unmöglich. Abhilfe kann insofern nur durch eine kontrollierte Abführung der radonhaltigen Luft, beispielsweise durch ein Ablüftungs- beziehungsweise Absaugsystem oder durch eine durchgängige radondichte Gebäudeabdichtung von den Baugrund berührenden Bodenplatten beziehungsweise Geschossdecken beziehungsweise Kellerböden und Kelleraußenwänden, die nachfolgend als Wände bezeichnet werden, geschaffen werden. Bei der Gebäudeabdichtung ist besonders auf eine gute Abdichtung bei der Durchführung von aus dem Baugrund ins Gebäude geführten Leitungen durch die Wände zu achten, da an diesen Durchdringungsstellen Radon besonders leicht aus dem Baugrund in das Gebäude eindringen kann. Insbesondere dann, wenn die umliegenden Wände gut gegen das Eindringen von Radon abgedichtet sind, tritt an undichten Durchdringungsstellen der Leitungen durch die Wände Radon mit einem Unterdruck vermehrt in das Gebäude ein, da im Baugrund in der Regel ein höherer Druck und eine geringere Temperatur als im Gebäude herrscht. Auf diese Weise kann radonhaltige Bodenluft aus einem Umkreis von 10 bis 20 Metern in das Gebäude eingesaugt werden.

Zur Abdichtung der Durchdringungsstellen der Leitungen durch die Wände sind am Markt beispielsweise Verschlussvorrichtungen mit einer trichterförmigen Manschette aus einem dauerelastischen Material bekannt, die auf die Leitung aufgeschoben beziehungsweise um die Leitung geschlagen werden können. Diesen Verschlussvorrichtungen ist jedoch gemein, dass die Manschette an der Durchdringungsstelle als einzige Barriere- beziehungsweise Sperrschicht gegenüber der radonhaltigen Luft wirkt und dass das dauerelastische Material, aus dem die Manschette hergestellt ist, in der Regel ein Kunststoff, Kautschuk beziehungsweise Silikon, nur bedingt gegenüber der radonhaltigen Luft abdichtet, das heißt nur bedingt radondicht ist.

Als radondichtes Material wird im Sinne der Erfindung ein Bauteil beziehungsweise Material verstanden, welches die radioaktiven Zerfallsprodukte des Radons während der Diffusion der Radonatome über mindestens drei Halbwertszeiten des Radons (die Halbwertszeit von Radon beträgt zirka 3,8 Tage) hinweg bindet, sodass der radioaktive Radonzerfall hauptsächlich im Bauteil beziehungsweise Material stattfindet. Die Radondichtigkeit eines Bauteils korreliert positiv mit der Dicke beziehungsweise Materialstärke einerseits und mit der Dichte und Ordnungs- beziehungsweise Kernladungszahl des Materials andererseits.

Aufgabe der vorliegenden Erfindung ist es daher, eine verbesserte Verschlussvorrichtung der eingangs genannten Art beziehungsweise eine Installationsanordnung mit derselben anzugeben, die eine verbesserte Dichtigkeit gegenüber radonhaltiger Luft aufweist.

Zur Lösung der Aufgabe weist die Erfindung die Merkmale des Patentanspruchs 1 auf. Demzufolge umfasst die Verschlussvorrichtung einen Anlagekörper mit einem Leitungsdurchbruch und eine als ein Hohlkörper aus einem dauerelastischen, luftdichten Material ausgebildete Manschette. Die Manschette weist einen sich von einem oberen Mantelende zu einem gegenüberliegenden unteren Mantelende trichterförmig aufweitenden Mantel, einen sich an das obere Mantelende des Mantels anschließenden, hohlzylindrischen Kragen und einen sich an das untere Mantelende des Mantels anschließenden und radial umlaufend von dem Mantel abragenden Flansch auf. Die Manschette ist an einer dem Kragen gegenüberliegenden ersten Flanschverbindungsfläche des Flansches luft- beziehungsweise radondicht mit einer Verbindungsfläche des Anlagekörpers verbunden derart, dass der Anlagekörper eine Rückwand für den Mantel bildet. Der Leitungsdurchbruch des Anlagekörpers und der Kragen der Manschette sind fluchtend zueinander positioniert derart, dass ein Leitungsdurchlass zur Durchführung der Leitung gebildet ist. Der Anlagekörper ist jedenfalls in einem um den Leitungsdurchbruch umlaufenden und den Mantel verdeckenden Bereich aus einem radondichten Material gebildet und ein Durchbruchsdurchmesser des Leitungsdurchbruchs ist kleiner als ein Manteldurchmesser des Mantels auf Höhe des unteren Mantelendes.

Der besondere Vorteil der Erfindung besteht darin, dass der Anlagekörper aus dem jedenfalls abschnittsweise und bevorzugt vollständig radondichten Material eine zusätzliche radondichte Barriere- beziehungsweise Sperrschicht zu der Manschette bildet. Zudem ist der Durchbruchsdurchmesser des Leitungsdurchbruchs kleiner als ein Manteldurchmesser des Mantels auf Höhe des unteren Mantelendes, sodass der Anlagekörper die Rückwand für den Mantel ausbildet. Dadurch weist die erfindungsgemäße Verschlussvorrichtung eine hohe Radondichtigkeit auf. Der Kragen der Manschette und der Leitungsdurchbruch des Anlagekörpers sind fluchtend zueinander positioniert, sodass in der Verschlussvorrichtung der Leitungsdurchlass für die Durchführung einer Leitung durch die Verschlussvorrichtung gebildet ist. Da die Manschette und der Anlagekörper bevorzugt werksseitig radondicht miteinander verbunden sind, insbesondere durch Verschweißen oder Verkleben, kann die erfindungsgemäße Verschlussvorrichtung als ein vorfertigbares, einteiliges Bauteil an einem Installationsort schnell montiert werden.

Nach einer bevorzugten Ausführungsform der Erfindung ist der Durchbruchsdurchmesser des Leitungsdurchbruchs 0 % bis 5 % größer und bevorzugt gleich groß zu dem Manteldurchmesser des Mantels auf Höhe des oberen Mantelendes. Vorteilhaft überragt somit der Anlagekörper den Mantel der Manschette nahezu vollständig. Bei Durchführung der Leitung durch die Verschlussvorrichtung ist zudem ein zwischen dem Leitungsdurchbruch und der Leitung gebildeter Ringspalt nahezu vollständig durch den Anlagekörper verdeckt. Demzufolge weist die erfindungsgemäße Verschlussvorrichtung eine hohe Radondichtigkeit auf.

Nach einer Weiterbildung der Erfindung ist die Manschette einstückig hergestellt. Sie ist bevorzugt aus Butyl und aus einem Elastomer und vorzugsweise Ethylen-Propylen-Dien-(Monomer)-Kautschuk (EPDM) als Elastomer hergestellt. Dies bedeutet, dass ein bevorzugtes Material für die Manschette ein Elastomer mit einer Butylgruppe, beispielsweise Butylkautschuk ist. Butylkautschuk weist eine gute Undurchlässigkeit beziehungsweise eine geringe Permeabilität gegenüber Gasen und insofern gegenüber radonhaltiger Luft auf. Insofern ist eine besonders hohe Dichtigkeit der Verschlussvorrichtung gegenüber radonhaltiger Luft gewährleistet, da die Manschette zusätzlich zu dem Anlagekörper eine radondichte Dichtschicht bildet.

Nach einer Weiterbildung der Erfindung ist die Manschette mit einer Sperrschicht aus einem radondichten Material beschichtet beziehungsweise kaschiert beziehungsweise dem Material der Manschette sind Partikel eines radondichten Materials beigemengt. Vorteilhaft weist somit die Manschette eine besonders hohe Dichtigkeit gegenüber radonhaltiger Luft auf. Beispielsweise kann die Manschette im Bereich des Kragens durch einen umlaufenden Streifen aus einem radondichten Material kaschiert sein, sodass sichergestellt ist, dass eine durch die Verschlussvorrichtung hindurchgeführte Leitung radondicht von dem Kragen umschlossen ist.

Nach einer Weiterbildung der Erfindung ist das radondichte Material ein metallischer Werkstoff und bevorzugt Aluminium. Metallische Werkstoffe weisen eine hohe Dichte auf und bilden eine effektive Abschirmung gegen die beim radioaktiven Zerfall von Radon auftretende Alphastrahlung. Dadurch ist bereits eine wenige Mikrometer dicke Metallfolie in der Lage, Alphastrahlung vollständig zu absorbieren. Aluminium stellt hierfür ein besonders geeignetes Folienmaterial dar, da es nach einer Wärmebehandlung weich und biegsam ist und sich demzufolge sehr gut verarbeiten lässt.

Nach einer Weiterbildung der Erfindung sind der Kragen der Manschette und der Leitungsdurchbruch des Anlagekörpers koaxial zueinander positioniert. Der Kragen und der Leitungsdurchbruch bilden insofern in der Verschlussvorrichtung den Leitungsdurchlass für einen geradlinigen Leitungsabschnitt der durch die Verschlussvorrichtung durchzuführenden Leitung aus.

Nach einer Weiterbildung der Erfindung ragt in den Leitungsdurchbruch des Anlagekörpers ein jedenfalls abschnittsweise aus einem dauerelastischen Material gebildeter Leitungskragen hinein. Bevorzugt ist der Leitungskragens des Anlagekörpers durch eine Mehrzahl an radial umlaufend nebeneinander beabstandet angeordneten, kreissektorförmigen Kragensegmenten gebildet. Demzufolge ist im Bereich des Leitungsdurchbruchs ein Leitungskragen gebildet, der sich beim Durchführen einer Leitung durch den Anlagekörper flexibel an den Leitungsmantel der Leitung anlegen und die Leitung mantelseitig umlaufend abdichten kann. Der Leitungskragen beziehungsweise die Kragensegmente sind dabei in ein Inneres des Mantels hinein umgeschlagen, sodass der Leitungsdurchbruch freigelegt ist.

Nach einer Weiterbildung der Erfindung ist eine auf den Flansch aufgelegte und den Flansch und den Anlagekörper voll umschließende Anschlussfolie umfasst. Die Anschlussfolie ist aus einem dauerelastischen und vorzugsweise radondichten Material gebildet. Die Anschlussfolie bildet eine flächige Dicht- beziehungsweise Sperrschicht insbesondere gegenüber aus der Wand diffundierendem Radon beziehungsweise dessen radioaktiven Radonzerfallsprodukten. Insofern kann eine Dicke beziehungsweise Wandstärke der Anschlussfolie variieren und mehrere Zentimeter betragen. Die Anschlussfolie kann Bestandteil der sogenannten schwarzen Wanne, das heißt einer großflächigen Dichthülle der baugrundseitigen Wände eines Gebäudes sein. Zur Durchführung des Mantels weist die Anschlussfolie einen korrespondierend zu dem Mantel geformten Durchführungsdurchbruch mit einem Innendurchmesser größer gleich einem Mantelaußendurchmesser des Mantels auf Höhe des unteren Mantelendes auf. Zudem ist die Anschlussfolie mit einer dem Flansch zugewandten Anschlussfläche mit der dem Anlagekörper gegenüberliegenden zweiten Flanschverbindungsfläche des Flansches luft- beziehungsweise radondicht verbunden, bevorzugt durch Verschweißen oder Verkleben.

Nach einer Weiterbildung der Erfindung ist die erste Flanschverbindungsfläche des Flansches mit der Verbindungsfläche des Anlagekörpers beziehungsweise die zweite Verbindungsfläche des Flansches mit der Anschlussfolie verklebt, wobei als Klebstoff ein luft- beziehungsweise radondichter Klebstoff und bevorzugt ein Butylklebstoff vorgesehen ist. Der Klebstoff ist bevorzugt flächig auf die erste Flanschverbindungsfläche beziehungsweise die zweite Flanschverbindungsfläche des Flansches der Manschette beziehungsweise auf die Verbindungsfläche beziehungsweise auf eine der Verbindungsfläche gegenüberliegende Anlagefläche des Anlagekörpers beziehungsweise auf die Anschlussfläche der Anschlussfolie appliziert, wobei auf den Klebstoff eine ablösbare Schutzfolie aufgelegt ist. Insbesondere die Anlagefläche des Anlagekörpers und die Anschlussfläche der Anschlussfolie weisen die Klebstoffschicht und die Schutzfolie auf, sodass sie selbstklebend ausgebildet sind. Bevorzugt sind der Flansch der Manschette und der Anlagekörper werksseitig miteinander verklebt. Die Anschlussfolie und der Flansch der Manschette sind bevorzugt am Installationsort, das heißt bauseitig, miteinander verklebt.

Zur Lösung der Aufgabe weist die Erfindung die Merkmale des Patentanspruchs 13 auf. Demzufolge umfasst die Installationsanordnung eine Wand, die insbesondere als eine baugrundseitige Bodenplatte, Geschossdecke, Kelleraußenwand beziehungsweise Kellerbodenplatte ausgebildet ist, mit einem Wanddurchbruch, umfasst eine durch den Wanddurchbruch hindurchgeführte und aus der Wand hinausragende Leitung und umfasst eine erfindungsgemäße Verschlussvorrichtung. Die Verschlussvorrichtung ist auf die Leitung aufgeschoben und umschließt die Leitung mantelseitig derart, dass oberseitig der Kragen der Manschette umlaufend an einen Leitungsmantel der Leitung angelegt und unterseitig die Leitung durch den Leitungsdurchbruch des Anlagekörpers hindurchgeführt ist. Die der Manschette gegenüberliegende Anlagefläche des Anlagekörpers ist an die Wand angelegt und bevorzugt auf die Wand aufgeklebt.

Der besondere Vorteil der Erfindung besteht darin, dass die auf die Leitung aufgeschobene Verschlussvorrichtung die Leitung mantelseitig auf Höhe des Kragens und auf Höhe des Anlagekörpers umlaufend luft- und bevorzugt radondicht verschließt. Zudem ist der Anlagekörper mit der Anlagefläche an die Wand angelegt und bevorzugt mit dieser radondicht verklebt. Die Manschette bildet insofern eine erste radondichte Schicht, der Anlagekörper eine zusätzliche radondichte Schicht in der Verschlussvorrichtung aus. Dadurch ist ein Eindringen von radonhaltiger Bodenluft durch den Wanddurchbruch der Wand verhindert. Da der Anlagekörper und die Manschette miteinander verbunden sind, lässt sich die Verschlussvorrichtung als werksseitig vorfertigbare Einheit schnell an der Durchdringungsstelle der Leitung durch die Wand installieren.

Nach einer bevorzugten Ausführungsform der Erfindung sind der Mantel und der Kragen der Manschette durch den Durchführungsdurchbruch der Anschlussfolie durchgeführt und die Anschlussfläche der Anschlussfolie liegt auf dem Flansch und der Wand auf. Bevorzugt ist die Anschlussfläche mit dem Flansch und der Wand radondicht verklebt. Die Anschlussfolie dichtet insofern auch den um die Durchdringungsstelle der Leitung durch die Wand umliegenden Bereich ab und ist luftdicht und bevorzugt radondicht mit dem Flansch der Manschette verschweißt beziehungsweise verklebt, sodass sich eine vollständige Barriere- beziehungsweise Sperrschicht für bodennahe, das heißt dem Baugrund zugewandte, Wände bilden lässt.

Nach einer Weiterbildung der Erfindung ist ein Leitungsdurchmesser der Leitung größer gleich und bevorzugt 0 % bis 5 % größer als ein Innendurchmesser des dauerelastisch ausgebildeten Kragens der Manschette beziehungsweise kleiner gleich und bevorzugt 0 % bis 2 % kleiner als der Durchbruchsdurchmessers des Leitungsdurchbruchs. Die Durchmesser des Kragens und des Leitungsdurchbruchs der Verschlussvorrichtung sind demzufolge auf den Leitungsdurchmesser der Leitung vorteilhaft abgestimmt derart, dass der Kragen umlaufend an den Leitungsmantel der Leitung mit einem leichten Anpressdruck angelegt ist und die Leitung mit einem möglichst geringen Spiel beziehungsweise Übermaß durch den Leitungsdurchbruch des Anlagekörpers hindurchführbar ist.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der erfindungsgemäßen Verschlussvorrichtung gelten selbstverständlich auch im Zusammenhang mit der erfindungsgemäßen Installationsanordnung und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter. Es zeigen:
- Fig. 1: eine erfindungsgemäße Installationsanordnung mit einem ersten Ausführungsbeispiel einer erfindungsgemäßen Verschlussvorrichtung im Vollschnitt,
- Fig. 2: ein zweites Ausführungsbeispiel der erfindungsgemäßen Verschlussvorrichtung nach Fig. 1 in einer perspektivischen Einzelansicht von oben,
- Fig. 3: die erfindungsgemäße Verschlussvorrichtung nach Fig. 2 in einer perspektivischen Einzelansicht von unten und
- Fig. 4: ein drittes Ausführungsbeispiel einer erfindungsgemäßen Verschlussvorrichtung in einer perspektivischen Einzelansicht von unten.

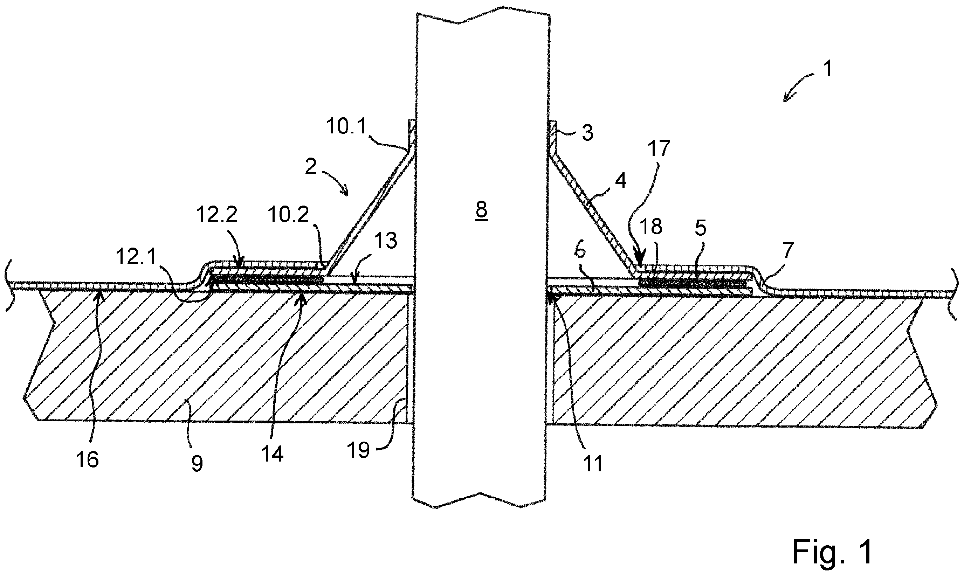

Eine erfindungsgemäße Installationsanordnung ist in der Fig. 1 im Vollschnitt angegeben. Die Installationsanordnung umfasst eine Wand 9 mit einem Wanddurchbruch 19, eine durch den Wanddurchbruch 19 hindurchgeführte und abschnittsweise aus der Wand 9 hinausragende Leitung 8 sowie eine erfindungsgemäße Verschlussvorrichtung 1 in einem ersten Ausführungsbeispiel.

Die erfindungsgemäße Installationsanordnung ist vorgesehen, um eine Durchdringungsstelle der Leitung 8 durch die Wand 9 radondicht zu verschließen. Sie kommt insbesondere an Wänden 9 zum Einsatz, die in Kontakt zu einem radonhaltigen Baugrund stehen, also insbesondere Bodenplatten, Geschossdecken beziehungsweise Kellerböden und Kelleraußenwände. Bei einem radonhaltigen Baugrund ist es erforderlich, ein darauf errichtetes Bauwerk gegen ein Eindringen von radonhaltiger Bodenluft abzudichten, da Radon radioaktiv zerfällt und die Zerfallsprodukte für den Menschen giftig beziehungsweise krebserregend sind. Insofern sind die Durchdringungsstellen von in das Haus geführten Leitungen 8, beispielsweise für Strom, Wasser, Telekommunikation oder dergleichen radondicht zu verschließen. Die erfindungsgemäße Installationsanordnung sieht diesbezüglich vor, dass die erfindungsgemäße Verschlussvorrichtung 1 soweit auf den aus der Wand 9 hinausragenden Abschnitt der Leitung 8 aufgeschoben ist, bis sie an der Wand 9 anliegt.

Die erfindungsgemäße Verschlussvorrichtung 1 umfasst hierzu einen flachen Anlagekörper 6, der aus einem radondichten Material, bevorzugt aus Aluminium, hergestellt ist und mit einer Anlagefläche 14 an der Wand 9 anliegt. Bevorzugt sind dabei die Wand 9 und die Anlagefläche 14 des Anlagekörpers 6 radondicht miteinander verklebt. Zur Durchführung der Leitung 8 weist der Anlagekörper 6 zudem einen Leitungsdurchbruch 11 auf.

Weiter umfasst die erfindungsgemäße Verschlussvorrichtung 1 eine aus einem dauerelastischen und luftdichten Material hergestellte Manschette 2. Die Manschette 2 ist als ein Hohlkörper ausgebildet. Sie weist einen trichterförmigen Mantel 4 auf, welcher sich von einem oberen Mantelende 10.1 zu einem unteren Mantelende 10.2 hin konisch aufweitet. An dem oberen Mantelende 10.1 schließt sich ein hohlzylindrischer Kragen 3 an den Mantel 4 an. An dem gegenüberliegenden unteren Mantelende 10.2 schließt sich ein flacher Flansch 5 an den Mantel 4 an. Der Flansch 5 ist um den Mantel 4 geschlossen umlaufend ausgebildet und ragt radial von dem Mantel 4 ab, wobei der Kragen 3 und der Flansch 5 der Manschette 2 senkrecht zueinander ausgerichtet sind.

Der Flansch 5 ist mit einer ersten Flanschverbindungsfläche 12.1 mit einer der Wand 9 gegenüberliegenden Verbindungsfläche 13 des Anlagekörpers 6 mittels eines Klebstoffs 18 verklebt. Vorzugsweise erfolgt das Verkleben des Flansches 5 und des Anlagekörpers 6 werksseitig, sodass die erfindungsgemäße Verschlussvorrichtung 1 als ein vorgefertigtes Einzelbauteil ausgebildet ist, dass sich schnell und werkzeuglos an der Durchdringungsstelle der Leitung 8 durch die Wand 9 installieren lässt.

Der Kragen 3 der Manschette 2 und der Leitungsdurchbruch 11 des Anlagekörpers 6 sind fluchtend zueinander angeordnet, sodass in der Verschlussvorrichtung 1 ein Leitungsdurchlass zur Durchführung der Leitung 8 ausgebildet ist. Dabei ist ein Innendurchmesser des Kragens 3 der dauerelastisch ausgebildeten Manschette 2 null bis fünf Prozent kleiner gewählt als ein Leitungsdurchmesser der Leitung 8, sodass der Kragen 3 mit einem leichten Anpressdruck umlaufend an die Leitung 8 angelegt ist und eine erste Dichtfläche definiert. Ein Durchbruchsdurchmesser des Leitungsdurchbruchs 11 ist 0 % bis 2 % größer als der Leitungsdurchmesser der Leitung 8 und bevorzugt gleich groß zu einem Manteldurchmesser des Mantels 4 auf Höhe des oberen Mantelendes 10.1 bemessen, sodass die Leitung 8 mit einem möglichst geringen Spiel beziehungsweise Übermaß durch den Leitungsdurchbruch hindurchführbar ist und der Mantel 4 von dem Anlagekörper 6 verdeckt ist.

Die Manschette 2 ist einstückig und vorzugsweise aus einem weitestgehend gasundurchlässigen Butylkautschuk auf EPDM-Basis hergestellt. Für eine erhöhte Radondichtigkeit kann die Manschette 2 zusätzlich mit einer Metallfolie beschichtet oder kaschiert sein beziehungsweise es können dem dauerelastischen Material der Manschette 2 Metallpartikel beigemischt sein.

Zum Abdichten der um den Anlagekörper 6 und den Flansch 5 umliegenden Wandbereiche der Wand 9 umfasst die erfindungsgemäße Verschlussvorrichtung 1 eine Anschlussfolie 7, die mit einer Anschlussfläche 16 auf die Wand 9 und auf eine dem Anlagekörper 6 gegenüberliegende zweite Flanschverbindungsfläche 12.2 aufgelegt und vorzugsweise aufgeklebt ist. Um auf den Flansch 5 aufgelegt werden zu können, weist die Anschlussfolie 7 einen kreisförmigen Durchführungsdurchbruch 17 auf mit einem Innendurchmesser größer gleich einem Mantelaußendurchmesser des Mantels 4 auf Höhe des unteren Mantelendes 10.2. Die Anschlussfolie 7 ist bevorzugt aus einem dauerelastischen, weitestgehend radondichten Material gefertigt, sodass sie eine flächige Dicht- beziehungsweise Sperrschicht gegenüber aus der Wand 9 diffundierendem Radon beziehungsweise dessen radioaktiven Radonzerfallsprodukten bilden kann. Insofern kann ihre Dicke beziehungsweise Wandstärke variieren und mehrere Zentimeter betragen. Die Anschlussfolie 7 kann Bestandteil der sogenannten schwarzen Wanne, das heißt einer großflächigen Dichthülle der baugrundseitigen Wände 9 eines Gebäudes sein.

Ein geeignetes Material für die Anschlussfolie 7 bilden beispielsweise EPDM oder Butylkautschuk. Auch kann die Anschlussfolie 7 als ein Werkstoffverbund ausgebildet sein und für eine erhöhte Radondichtigkeit eine Schicht aus Metallfolie, beispielsweise Aluminiumfolie, enthalten.

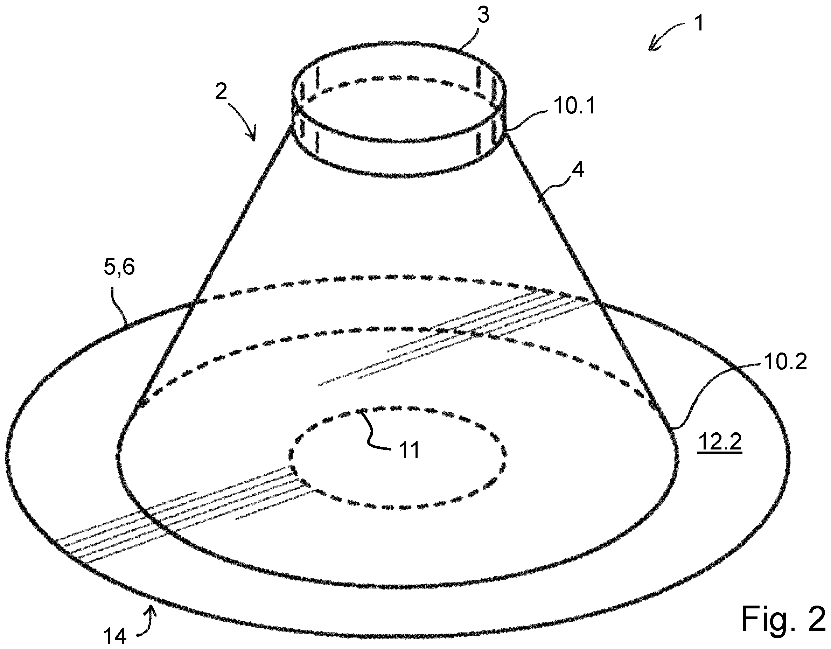

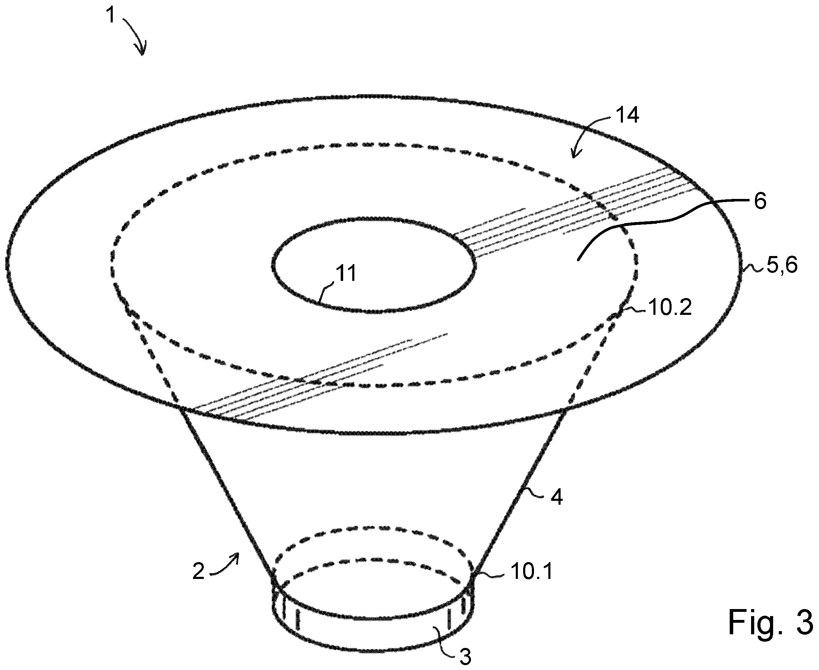

Die Fig. 2 und Fig. 3 geben ein zweites Ausführungsbeispiel der erfindungsgemäßen Verschlussvorrichtung 1 in verschiedenen perspektivischen Einzelansichten an. Jeweils sind darin verdeckte Kanten der Verschlussvorrichtung 1 durch gestrichelte Linien dargestellt. Bei diesem Ausführungsbeispiel der erfindungsgemäßen Verschlussvorrichtung 1 ist auf die Anschlussfolie 7 verzichtet und es sind wie gehabt die miteinander verklebte Manschette 2 und der Anlagekörper 6 umfasst. Aus Vereinfachungsgründen ist auf eine Darstellung des Klebstoffs 18 in den Fig. 2 und Fig. 3 verzichtet. Vielmehr sind der Flansch 5 und der Anlagekörper 6 als eine stoffschlüssig miteinander verbundene Einheit dargestellt.

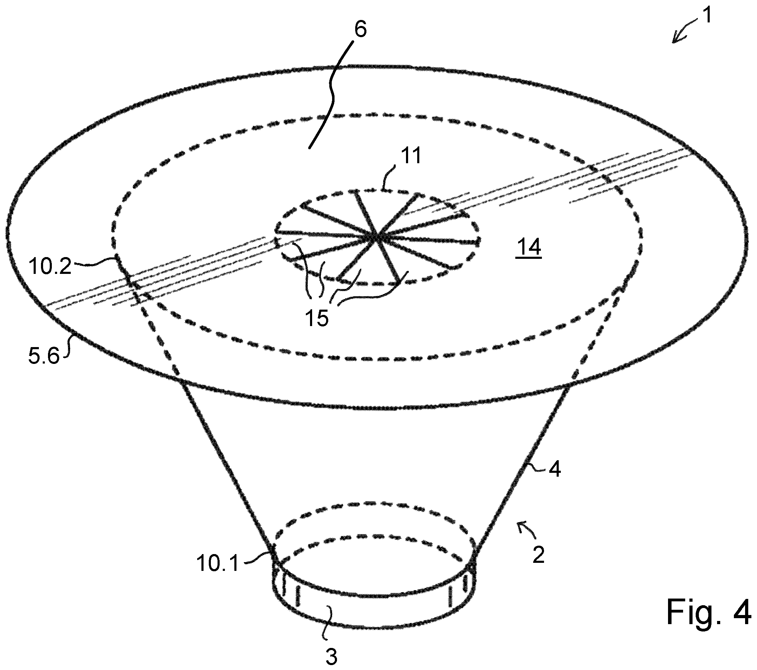

Ein drittes Ausführungsbeispiel der erfindungsgemäßen Verschlussvorrichtung 1 ist in Fig. 4 in einer perspektivischen Ansicht von unten angegeben. Verdeckte Kanten der Verschlussvorrichtung 1 sind wie gehabt durch gestrichelte Linien dargestellt. Die Manschette 2 und der damit verklebte Anlagekörper 6 sind analog zu dem Ausführungsbeispiel der erfindungsgemäßen Verschlussvorrichtung 1 nach den Fig. 2 und Fig. 3 gebildet, wobei jedoch der Leitungsdurchbruch 11 des Anlagekörpers 6 durch einen aus mehreren Kragensegmenten 15 gebildeten Leitungskragen verschlossen ist. Die Kragensegmente 15 sind aus einem dauerelastischen Material hergestellt und radial umlaufend nebeneinanderliegend angeordnet, wobei sie die Form von Kreissektoren aufweisen. Beim Durchführen der Leitung 8 werden die Kragensegmente 15 in ein Inneres des Mantels 4 hinein umgeschlagen, sodass der Leitungsdurchbruch 11 freigelegt ist. Dabei liegen die Kragensegmente 15 mantelseitig umlaufend an der Leitung 8 an, sodass eine erhöhte Radondichtigkeit realisierbar ist, indem die Kragensegmente 15 eine zweite Dichtfläche bilden zusätzlich zu der ersten Dichtfläche, welche durch den umlaufend an der Leitung 8 anliegenden Kragen 3 gebildet ist. Die Kragensegmente 15 sind vorzugsweise analog zu der Manschette 2 aus Butylkautschuk auf EPDM-Basis hergestellt. Auch können sie als Verbundwerkstoff mit einer Schicht aus Metallfolie hergestellt sein.

Die Erfindung ist nicht auf die figürlich dargestellten Ausführungsbeispiele der Installationsanordnung beziehungsweise der Verschlussvorrichtung 1 beschränkt. Jeweils sind die Komponenten hinsichtlich ihrer Gestalt, Dimensionierung und Anordnung zueinander in weiten Grenzen frei wählbar. Beispielsweise können nach einem alternativen Ausführungsbeispiel der erfindungsgemäßen Verschlussvorrichtung 1 der Kragen 3 und der Mantel 4 der Manschette 2 fließend ineinander übergehen. Zudem können für eine erhöhte Radondichtigkeit an einer Innenwand des Kragens 3 der Manschette 2 oder an einer dem Leitungsdurchbruch 11 umschließenden Innenwand des Anlagekörpers 6 eine oder mehrere geschlossen umlaufende Dichtlippen beziehungsweise Anlagewulste aus einem dauerelastischen und vorzugsweise radondichten Material gebildet sein. Zudem kann der in den Leitungsdurchbruch 11 hineinragende Leitungskragen geschlossen umlaufend ausgebildet sein und analog zu dem Kragen 3 der Manschette 4 mantelseitig an die Leitung 8 mit einem leichten Anpressdruck angelegt sein.

Nach einem weiteren alternativen Ausführungsbeispiel der erfindungsgemäßen Verschlussvorrichtung 1 können der Flansch 5 und der Anlagekörper 6 beziehungsweise der Flansch und die Anschlussfolie 7 miteinander verschweißt sein.

Gleiche Bauteile und Bauteilfunktionen sind durch gleiche Bezugszeichen gekennzeichnet.

## Patentansprüche

1. Verschlussvorrichtung (1) zum radondichten Verschluss einer Durchdringungsstelle einer Leitung (8) durch eine Wand (9), insbesondere eine baugrundseitige Bodenplatte und/oder Geschossdecke und/oder Kelleraußenwand und/oder Kellerbodenplatte, umfassend einen Anlagekörper (6) mit einem Leitungsdurchbruch (11) und umfassend eine als ein Hohlkörper aus einem dauerelastischen, luftdichten Material ausgebildete Manschette (2) mit einem sich von einem oberen Mantelende (10.1) zu einem gegenüberliegenden unteren Mantelende (10.2) trichterförmig aufweitenden Mantel (4), mit einem sich an das obere Mantelende (10.1) des Mantels (4) anschließenden, hohlzylindrischen Kragen (3) und mit einem sich an das untere Mantelende (10.2) des Mantels (4) anschließenden und radial umlaufend von dem Mantel (4) abragenden Flansch (5), wobei die Manschette (2) an einer dem Kragen (3) gegenüberliegenden ersten Flanschverbindungsfläche (12.1) des Flansches (5) luft- und/oder radondicht mit einer Verbindungsfläche (13) des Anlagekörpers (6) verbunden ist derart, dass der Anlagekörper (6) eine Rückwand für den Mantel (4) bildet, wobei der Leitungsdurchbruch (11) des Anlagekörpers (6) und der Kragen (3) der Manschette (2) fluchtend zueinander positioniert sind derart, dass ein Leitungsdurchlass zur Durchführung der Leitung (8) gebildet ist, wobei ein Durchbruchsdurchmesser des Leitungsdurchbruchs (11) kleiner einem Manteldurchmesser des Mantels (4) auf Höhe des unteren Mantelendes (10.2) ist und wobei der Anlagekörper (6) jedenfalls in einem um den Leitungsdurchbruch (11) umlaufenden und den Mantel (4) verdeckenden Bereich aus einem radondichten Material gebildet ist.

2. Verschlussvorrichtung (1) nach Anspruch 1, **dadurch gekennzeichnet, dass** der Durchbruchsdurchmesser des Leitungsdurchbruchs (11) 0 % bis 2 % größer und bevorzugt gleich groß ist wie der Manteldurchmesser des Mantels (4) auf Höhe des oberen Mantelendes (10.2).

3. Verschlussvorrichtung (1) nach Anspruch 1 oder 2, **dadurch gekennzeichnet, dass** die Manschette (2) einstückig und/oder aus Butyl und aus einem Elastomer und vorzugsweise Ethylen-Propylen-Dien-(Monomer)-Kautschuk als Elastomer hergestellt ist.

4. Verschlussvorrichtung (1) nach einem der Ansprüche 1 bis 3, **dadurch gekennzeichnet, dass** die Manschette (2) mit einer Sperrschicht aus einem radondichten Material beschichtet und/oder kaschiert ist und/oder dass dem Material der Manschette (2) Partikel eines radondichten Materials beigemengt sind.

5. Verschlussvorrichtung (1) nach einem der Ansprüche 1 bis 4, **dadurch gekennzeichnet, dass** das radondichte Material ein metallischer Werkstoff und bevorzugt Aluminium ist.

6. Verschlussvorrichtung (1) nach einem der Ansprüche 1 bis 5, **dadurch gekennzeichnet, dass** der Kragen (3) der Manschette (2) und der Leitungsdurchbruch (11) des Anlagekörpers (6) koaxial zueinander positioniert sind.

7. Verschlussvorrichtung (1) nach einem der Ansprüche 1 bis 6, **dadurch gekennzeichnet, dass** in den Leitungsdurchbruch (11) des Anlagekörpers (6) jedenfalls abschnittsweise ein Leitungskragen aus einem dauerelastischen Material hineinragt.

8. Verschlussvorrichtung (1) nach Anspruch 7, **dadurch gekennzeichnet, dass** der Leitungskragen des Anlagekörpers (6) durch eine Mehrzahl an radial umlaufend nebeneinander beabstandet angeordneten kreissektorförmigen Kragensegmenten (15) gebildet ist.

9. Verschlussvorrichtung (1) nach einem der Ansprüche 1 bis 8, **dadurch gekennzeichnet, dass** eine auf den Flansch (5) aufgelegte und den Flansch (5) und den Anlagekörper (6) voll umschließende Anschlussfolie (7) umfasst ist, wobei die Anschlussfolie (7) aus einem dauerelastischen und vorzugsweise radondichten Material gebildet ist, zur Durchführung des Mantels (4) einen korrespondierend zu dem Mantel (4) geformten Durchführungsdurchbruch (17) mit einem Innendurchmesser größer gleich einem Mantelaußendurchmesser des Mantels (4) auf Höhe des unteren Mantelendes (10.2) aufweist und mit einer dem Flansch (5) zugewandten Anschlussfläche (16) mit der dem Anlagekörper (6) gegenüberliegenden zweiten Flanschverbindungsfläche (12.2) des Flansches (5) luft- und/oder radondicht verbunden ist.

10. Verschlussvorrichtung (1) nach einem der Ansprüche 1 bis 9, **dadurch gekennzeichnet, dass** der Flansch (5) der Manschette (2) und der Anlagekörper (6) einen gleichen Querschnittsumfang aufweisen und deckungsgleich übereinandergelegt sind.

11. Verschlussvorrichtung (1) nach einem der Ansprüche 1 bis 10, **dadurch gekennzeichnet, dass** die erste Flanschverbindungsfläche (12.1) des Flansches (5) mit der Verbindungsfläche (13) des Anlagekörpers (6) verklebt ist und/oder die zweite Verbindungsfläche (12.2) des Flansches (5) mit der Anschlussfolie (7) verklebt ist, wobei als Klebstoff (18) ein luft- und/oder radondichter Klebstoff und bevorzugt ein Butylklebstoff vorgesehen ist.

12. Verschlussvorrichtung (1) nach Anspruch 11, **dadurch gekennzeichnet, dass** der Klebstoff (18) flächig auf die erste Flanschverbindungsfläche (12.1) und/oder die zweite Flanschverbindungsfläche (12.2) des Flansches (5) der Manschette (2) und/oder auf die Verbindungsfläche (13) und/oder eine der Verbindungsfläche (13) gegenüberliegende Anlagefläche (14) des Anlagekörpers (6) und/oder auf die Anschlussfläche (16) der Anschlussfolie (7) appliziert ist, wobei auf den Klebstoff (18) eine ablösbare Schutzfolie aufgelegt ist.

13. Installationsanordnung umfassend eine Wand (9), insbesondere einer baugrundseitigen Bodenplatte und/oder Geschossdecke und/oder Kelleraußenwand und/oder Kellerbodenplatte, mit einem Wanddurchbruch (19), umfassend eine durch den Wanddurchbruch (19) hindurchgeführte und aus der Wand (9) hinausragende Leitung (8) und umfassend eine Verschlussvorrichtung (1) nach einem der Ansprüche 1 bis 12, wobei die Verschlussvorrichtung (1) auf die Leitung (8) aufgeschoben ist und diese mantelseitig umschließt derart, dass oberseitig der Kragen (3) der Manschette (2) umlaufend an einen Leitungsmantel der Leitung (8) angelegt und unterseitig die Leitung (8) durch den Leitungsdurchbruch (11) des Anlagekörpers (6) hindurchgeführt ist, wobei die der Manschette (2) gegenüberliegende Anlagefläche (14) des Anlagekörpers (6) an die Wand (9) angelegt und/oder auf die Wand (9) aufgeklebt ist.

14. Installationsanordnung nach Anspruch 13, **dadurch gekennzeichnet, dass** der Mantel (4) und der Kragen (3) der Manschette (4) durch den Durchführungsdurchbruch (18) der Anschlussfolie (7) durchgeführt sind und die Anschlussfläche (16) der Anschlussfolie (7) auf dem Flansch (5) der Manschette (2) und auf der Wand (9) aufliegt und/oder aufgeklebt ist.

15. Installationsanordnung nach Anspruch 13 oder 14, **dadurch gekennzeichnet, dass** ein Leitungsdurchmesser der Leitung (8) größer gleich und bevorzugt 0 % bis 5 % größer ist als ein Innendurchmesser des dauerelastisch ausgebildeten Kragens (3) der Manschette (2) und/oder kleiner gleich und bevorzugt 0 % bis 2 % kleiner ist als der Durchbruchsdurchmessers des Leitungsdurchbruchs (11).

16. Installationsanordnung nach einem der Ansprüche 13 bis 15, **dadurch gekennzeichnet, dass** der Leitungskragen und/oder die Kragensegmente (15) des Leitungskragens des Anlagekörpers (6) durch die durch den Leitungsdurchbruch (11) des Anlagekörpers (6) hindurchgeführte Leitung (8) zu dem Mantel (4) der Manschette (2) hin umgeschlagen und mantelseitig an die Leitung angelegt ist/sind.
